# EUROPEAN PATENT APPLICATION

(11) **EP 4 242 184 A1**
(43) Date of publication of application: **13.09.2023**
(21) Application number: 22160667.6
(22) Date of filing: 08.03.2022
(51) Int. Cl.: C04B 28/06, C04B 40/00

(54) **STABILIZED AQUEOUS COMPOSITION BASED ON BLOCKED GROUND-GRANULATED BLAST FURNACE SLAG FOR INITIATING SETTING AND HARDENING OF ALUMINOUS CEMENT COMPOSITIONS**

(71) Applicant: Hilti Aktiengesellschaft, 9494 Schaan (LI)
(72) Inventor: Schönlein, Markus, 82205 Gilching (DE)
(74) Representative: Hilti Aktiengesellschaft Corporate Intellectual Property

(57) **Abstract**

The present invention pertains to a long-term stabilized aqueous initiator composition for initiating setting and hardening of aluminous cement compositions, comprising blocked ground-granulated blast-furnace slag, a thickening agent, water and optionally at least one mineral filler; to a method for preparing the long-term stabilized aqueous initiator composition as well as to the use of said composition in a system for chemical fastening of anchoring means in mineral substrates.

## Description

### FIELD OF THE INVENTION

The present invention pertains to a long-term stabilized aqueous initiator composition for initiating setting and hardening of aluminous cement compositions. In particular, the long-term stabilized aqueous initiator composition comprises blocked ground-granulated blast-furnace slag, a thickening agent, water and optionally at least one mineral filler. Moreover, the present invention pertains to a method for preparing the long-term stabilized aqueous initiator composition as well as to the use of said composition in a system for chemical fastening of anchoring means, preferably of metal elements, in mineral substrates, such as structures made of brickwork, concrete, pervious concrete or natural stone.

### BACKGROUND OF THE INVENTION

Aqueous compositions, in particular aqueous suspensions are heterogeneous mixtures containing solid particles that are sufficiently large for sedimentation and come in the form of more or less of a fluid or paste. The advantage of such suspensions is, that they form ready to use solutions to be directly employed in any application for construction chemistry, such as chemical fastening of anchoring means, preferably metal elements, such as anchor rods, in particular threaded rods, bolts, steel reinforcement bars or the like into recesses, such as boreholes, in mineral substrates, such as structures made of brickwork, concrete, pervious concrete or natural stone.

Organic systems based on free-radically polymerizable resins are used when fast curing is desired. However, such systems are generally known to be polluting, expensive, potentially hazardous and/or toxic for the environment and for the person who handles them and they often need to be specifically labelled.

In order to overcome these drawbacks, predominantly mineral systems based on aluminous cement have been developed. Aluminous cement has as its major constituent monocalcium aluminate and is widely used in the building and construction industries as the final products evidence a high level of mechanical performance over extended periods of time. Also, aluminous cement is resistant to bases and attains its maximum strength more rapidly than Portland cement and is capable of withstanding solutions of sulfates. Hence, aluminous cement systems are preferably employed in the field of chemical anchoring.

In particular, many two-component mortar systems, which are sometimes also referred to as kit-of-parts, exist, in which each of the components is intended to be mixed prior to use or during application in order to initiate the curing process to provide good chemical fastening of anchoring means in mineral substrates. One component provides for a stabilized cementitious composition which is then initiated by another component to set and harden.

Additives for setting and hardening of aluminous cement are known from the prior art. For example, US 3,826,665 describes an adjuvant composition for improving the setting and hardening properties of aluminous cement.

DE 2 311 239 describes an adjuvant composition for improving the setting and hardening properties of aluminous cement and mortar, comprising Lithia, a water-soluble lithium salt and a hydroxylated organic acid, or a salt or ester thereof. Said fluid is incorporated directly into the aluminous cement or into mortars and concretes during their manufacture or may be added to the mixing water during application. However, a disadvantage of this system lies within the fact that the activator composition cannot be stored for a sufficient time in order to be ready-for-use and hence has to be freshly prepared before use depending on desired setting and hardening times implying more procedural steps before application. Also, said lithium-based activator components are expensive, its harvesting often from a humanitarian, economic and political point of view problematic and has a high carbon-footprint.

When it comes to chemically fastening anchoring means in mineral substrates, a rapid curing time, i.e. of less than 5 minutes, is not always desired. Further, most of the known systems lack sufficient fluidity for most practical applications of the resultant compositions. Often such prior art compositions also evidence a tendency to crack in a relatively short time or do not exhibit the required mechanical performance, also under the influence of elevated temperatures. Moreover, these systems cannot be stored for a long time before use.

Therefore, there is a need for a long-term stabilized aqueous initiator composition for initiating setting and hardening of aluminous cement compositions, which is superior over the prior art systems with regard to environmental aspects, health and safety, handling, storage time and when applied a good balance between setting and hardening of the mortar. Moreover, it is of interest to provide a long-term stabilized aqueous initiator composition that can be used in a multiple-component system for chemical fastening of anchoring means in mineral substrates without adversely affecting the handling, characteristics and the mechanical performance of the chemical anchoring system. Further, it is of interest to reduce the employed water-to-cement ratio and conversion in a system, which leads to a decrease of performance over time. Finally, there is a need for a long-term stabilized aqueous initiator composition that has low carbon footprint.

In view of the above, it is an object of the present invention to provide a long-term stabilized aqueous initiator composition, which overcomes the disadvantages of the prior art compositions. In particular, it is an object to provide a long-term stabilized aqueous initiator composition that is ready-for-use, which can be handled easily and is eco-friendly, which can be stably stored for a certain period of time prior to use, which exhibits a good balance between setting and hardening when applied and still results in an excellent mechanical performance of the system when it comes to chemically fastening anchoring means, even under the influence of elevated temperatures and has a low carbon footprint as well as reduces the employed water-to-cement ratio and conversion in a system.

Furthermore, it is an object of the present invention to provide a method for preparing a long-term stabilized aqueous initiator composition that can be used in a multiple-component system, which is cost-effective, eco-friendly, simple to perform and results in a stable and easy to apply aqueous initiator composition.

Besides, it is also an object to provide a method for activating the setting and hardening of a curable aqueous-phase aluminous cement component, which can be performed easily resulting in a chemical anchor that can be used in the field of chemically fastening of anchoring means in mineral substrates.

Moreover, it is an object of the present invention to provide a long-term stabilized aqueous initiator composition that can be used in a multiple-component system, in particular in a two-component system for chemical fastening of anchoring means, preferably of metal elements, in mineral substrates, such as structures made of brickwork, concrete, pervious concrete or natural stone.

These and other objectives as they will become apparent from the ensuring description of the invention are solved by the present invention as described in the independent claims. The dependent claims pertain to preferred embodiments.

### SUMMARY OF THE INVENTION

In one aspect, the present invention provides a long-term stabilized aqueous initiator composition for initiating setting and hardening of aluminous cement compositions, which is stable at room temperature and at elevated temperatures over a certain time period. In particular, the long-term stabilized aqueous initiator composition comprises blocked ground-granulated blast-furnace slag, a thickening agent, water and optionally at least one mineral filler.

In another aspect, the present invention provides a method for preparing said long-term stabilized aqueous initiator composition.

In yet another aspect, the present invention provides a method for activating the setting and hardening of a curable aqueous-phase aluminous cement component using the long-term stabilized aqueous initiator composition.

In yet another aspect, the present invention provides a long-term stabilized aqueous initiator composition that can be used in a multiple-component system, in particular in a two-component system for chemical fastening of anchoring means, preferably of metal elements, in mineral substrates, such as structures made of brickwork, concrete, pervious concrete or natural stone.

### DETAILED DESCRIPTION OF THE INVENTION

The following terms and definitions will be used in the context of the present invention:
As used in the context of present invention, the singular forms of "a" and "an" also include the respective plurals unless the context clearly dictates otherwise. Thus, the term "a" or "an" is intended to mean "one or more" or "at least one", unless indicated otherwise.

The term "aluminous cement" in the context of the present invention refers to a calcium aluminate cement that consists predominantly of hydraulic active calcium aluminates. Alternative names are "high-alumina cement" or "Ciment fondu" in French. The main active constituent of calcium aluminate cements is monocalcium aluminate (CaAl₂O₄, CaO · Al₂O₃, or CA in the cement chemist notation).

The term "shelf life" in the context of the present invention refers to the time during which a component stays in the form of a more or less fluid aqueous composition of solid products, capable of coming back to the aqueous-composition by mechanical means, without setting or losing its reactivity.

The term "initiator" in the context of the present invention refers to a compound or composition that modifies the chemical environment to start a particular chemical reaction. In the present invention the initiator modifies the pH-value of the mortar composition thereby de-blocking the hydraulic binder in the final mixture.

The term "binder" or "binder component" in the context of the present invention refers to the calcium-aluminate-based cementitious constituent and other additional optional components, such as for example fillers. In particular, the term "main binder component" refers to component A.

The term "stable" or "stabilized" in the context of the present invention means that the viscosity and pH-value of the aqueous initiator composition does not change much during storage and does the composition does not set or harden.

The term "long-term stabilized aqueous initiator composition" in the context of the present invention is also referred to as component B with regard to a two-component mortar system.

It has been surprisingly found out by the inventors, that the long-term stabilized aqueous initiator composition based on blocked ground-granulated blast-furnace slag (GGBFS) can be used to activate an aqueous slurry comprising blocked aluminous component as the main binder component in an inorganic mortar system.

While common calcium aluminate-based binders are relying on a carbonate-source that is either synthesized or mined, to buffer the strength loss by the conversion phenomenon, ground-granulated blast-furnace slag is a waste product from steel production and is therefore cheap and has a low carbon footprint, when re-used as binder. By blocking the ground-granulated blast-furnace slag with for example a sugar, like e.g. gluconate, in water, an alkaline pH is achieved that can be used to activate the blocked calcium aluminate cement component. Hence, there is no need for a separate activation agent like sodium or lithium hydroxide. The evolving alkaline pH from the calcium aluminate cement hydration is then activating the ground-granulated blast-furnace slag.

Additionally, it has been found that in particular the use of ground-granulated blast-furnace slag is more sustainable compared to using common Portland cements and has also a lower carbon footprint than synthetic resins.

The present invention pertains to a long-term stabilized aqueous initiator composition comprising blocked ground-granulated blast-furnace slag, a thickening agent, water and optionally at least one mineral filler.

The ground-granulated blast-furnace slag preferably comprises from 30 to 45 % calcium oxide (CaO), from 30 to 45 % silicon dioxide (SiO₂), from 1 to 15 % aluminum oxide (Al₂O₃) and from 4 to 17 % Magnesium oxide (MgO), and 0.5 to 1 % sulfur (S). Further characteristic contents of the ground-granulated blast-furnace slag are ferric oxide (Fe₂O₃), sodium oxide (Na₂O), potassium oxide (K₂O), chloride, sulfur trioxide (SO₃) and manganese oxide (Mn₂O₃), which preferably represent less than 5 % of the ground-granulated blast-furnace slag.

The long-term stabilized aqueous initiator composition of the present invention comprises at least about 5 wt.-%, preferably at least about 10 wt.-%, more preferably at least about 20 wt.-%, most preferably at least about 30 wt.-%, from about 5 wt.-% to about 80 wt.-%, preferably from about 10 wt.-% to about 70 wt.-%, more preferably from about 20 wt.-% to about 60 wt.-%, most preferably from about 30 wt.-% to about 55 wt.% of ground-granulated blast-furnace slag, based on the total weight of the long-term stabilized aqueous initiator composition.

The blocked ground-granulated blast-furnace slag of the long-term stabilized aqueous initiator composition comprises ground-granulated blast-furnace slag and a blocking agent. The blocking agent for the ground-granulated blast-furnace slag is selected from the group consisting of gluconic acid, glycolic acid, phosphonic acid, salts and esters thereof, glucose, and mixtures thereof. Preferably, the blocking agent is a gluconate salt, more preferably is sodium gluconate.

The long-term stabilized aqueous initiator composition comprises at least about 0.01 wt.%, preferably at least about 0.05 wt.-%, more preferably at least about 0.1 wt.-%, most preferably at least about 1.0 wt.-%, from about 0.01 wt.-% to about 25 wt.-%, preferably from about 0.05 wt.-% to about 20 wt.-%, more preferably from about 0.1 wt.-% to about 15 wt.-%, most preferably from about 1.0 wt.-% to about 10 wt.-% of said blocking agent. In a most preferred embodiment, the long-term stabilized aqueous initiator composition comprises from about 0.2 to about 0.4 wt.-% of sodium gluconate, based on the total weight of the long-term stabilized aqueous initiator composition.

The long-term stabilized aqueous initiator composition comprises further a thickening agent. The thickening agent to be used in the present invention may be selected from the group consisting of bentonite, silicon dioxide, quartz, thickening agents based on acrylate, such as alkali-soluble or alkali-swellable emulsions, fumed silica, clay and titanate chelating agents. Exemplarily mentioned are polyvinyl alcohol (PVA), hydrophobically modified alkali soluble emulsions (HASE), hydrophobically modified ethylene oxide urethane polymers known in the art as HEUR, and cellulosic thickeners such as hydroxymethyl cellulose (HMC), hydroxyethyl cellulose (HEC), hydrophobically-modified hydroxy ethyl cellulose (HMHEC), sodium carboxymethyl cellulose (SCMC), sodium carboxymethyl 2-hydroxyethyl cellulose,2-hydroxypropyl methyl cellulose, 2-hydroxyethyl methyl cellulose, 2-hydroxybutyl methyl cellulose, 2-hydroxyethyl ethyl cellulose, 2-hydoxypropyl cellulose, attapulgite clay, and mixtures thereof. Suitable thickening agents are commercially available products, such as Optigel WX (BYK-Chemie GmbH, Germany), Rheolate 1 (Elementis GmbH, Germany) and Cellosize^{™}, Acrysol ASE-60 (The Dow Chemical Company). Component B comprises at least about 0.01 wt.-%, preferably at least about 0.05 wt.-%, more preferably at least about 0.1 wt.%, most preferably at least about 0.3 wt.-%, from about 0.01 wt.-% to about 15 wt.-%, preferably from about 0.05 wt.-% to about 10 wt.-%, more preferably from about 0.1 wt.% to about 5 wt.-%, most preferably from about 0.1 wt.-% to about 1 wt.-% of said thickening agent, based on the total weight of the long-term stabilized aqueous initiator composition.

In a preferred embodiment, the long-term stabilized aqueous initiator composition may comprise a cellulosic thickener, such as hydroxymethyl cellulose (HMC) or hydroxyethyl cellulose (HEC).

The long-term stabilized aqueous initiator composition may optionally comprise at least one mineral filler. The mineral filler which can be used in the present invention may be limestone fillers, such as calcites, sand, corundum, dolomite, alkaline-resistant glass, crushed stones, gravels, pebbles, quartz, quartz powder, quartz sand, clay, fly ash, fumed silica, brick flour, rice peel ash, phonolite, calcined clay and metakaolin, carbonate compounds, pigments, titanium oxides, light fillers, gypsum or mixtures thereof. Suitable fillers are commercially available products. The long-term stabilized aqueous initiator composition may comprise at least about 1 wt.-%, preferably at least about 10 wt.-%, more preferably at least about 20 wt.-%, most preferably at least about 30 wt.-%, said at least one filler, based on the total weight of the long-term stabilized aqueous initiator composition. The at least one mineral filler comprised in the long-term stabilized aqueous initiator composition according to the present invention is preferably a mixture of mineral fillers.

In an advantageous embodiment, the long-term stabilized aqueous initiator composition further comprises the following characteristics, taken alone or in combination.

The long-term stabilized aqueous initiator composition may additionally comprise also a plasticizer. The plasticizer may be selected from the group consisting of low molecular weight (LMW) polyacrylic acid polymers, superplasticizers from the family of polyphosphonate polyox and polycarbonate polyox, and ethacryl superplasticizers from the polycarboxylate ether group, and mixtures thereof, for example Ethacryl^{™} G (Coatex, Arkema Group, France), Acumer^{™} 1051 (Rohm and Haas, U.K.), or Sika^{®} ViscoCrete^{®}-20 HE (Sika, Germany). Suitable plasticizers are commercially available products. Component B may comprise at least about 0.2 wt.-%, preferably at least about 0.3 wt.%, more preferably at least about 0.4 wt.-%, most preferably at least about 0.5 wt.-%, from about 0.2 wt.-% to about 20 wt.-%, preferably from about 0.3 wt.-% to about 15 wt.%, more preferably from about 0.4 wt.-% to about 10 wt.-%, most preferably from about 0.5 wt.-% to about 5 wt.-% of said plasticizer, based on the total weight of the long-term stabilized aqueous initiator composition.

The water content comprised in the long-term stabilized aqueous initiator composition is at least about 1 wt.-%, preferably at least about 5 wt.-%, more preferably at least about 10 wt.-%, most preferably at least about 20 wt.-%, from about 1 wt.-% to about 50 wt.%, preferably from about 5 wt.-% to about 40 wt.-%, more preferably from about 10 wt.% to about 30 wt.-%, most preferably from about 15 wt.-% to about 25 wt.-%, based on the total weight of the long-term stabilized aqueous initiator composition.

The presence of a plasticizer and thickening agent does not change the overall inorganic nature of the long-term stabilized aqueous initiator composition.

Further, the long-term stabilized aqueous initiator composition, when used as an initiator for an aluminous cement component, may comprise an accelerator component. The accelerator component may be constituted of at least one alkali and/or earth alkaline metal salt selected from the group consisting of hydroxides, chlorides, sulfates, phosphates, monohydrogen phosphates, dihydrogen phosphates, nitrates, carbonates and mixtures thereof, preferably the accelerator component is an alkali or earth alkaline metal salt, still preferably is a water-soluble alkali or earth alkaline metal salt, more preferably is a calcium metal salt, such as calcium hydroxide, calcium sulfate, calcium carbonate, calcium chloride, calcium formate or calcium phosphate, a sodium metal salt, such as sodium hydroxide, sodium sulfate, sodium carbonate, sodium chloride, sodium formate or sodium phosphate, or a lithium metal salt, such as lithium hydroxide, lithium sulfate, lithium sulfate monohydrate, lithium carbonate, lithium chloride, lithium formate or lithium phosphate, most preferably is lithium sulfate or lithium sulfate monohydrate. The long-term stabilized aqueous initiator composition may comprise at least about 0.01 wt.-%, preferably at least about 0.05 wt.-%, more preferably at least about 0.1 wt.-%, most preferably at least about 1.0 wt.-%, from about 0.01 wt.-% to about 25 wt.-%, preferably from about 0.05 wt.-% to about 20 wt.-%, more preferably from about 0.1 wt.% to about 15 wt.-%, most preferably from about 1.0 wt.-% to about 10 wt.-% of said accelerator, based on the total weight of the long-term stabilized aqueous initiator composition.

The long-term stabilized aqueous initiator composition comprising the initiator and retarder is present in aqueous-phase, preferably in form of a slurry or paste.

It is preferred that the pH-value of the long-term stabilized aqueous initiator composition is above 10, more preferably above 11 and most preferably is above 12, in particular in the range between 10 and 14, preferably between 11 and 13.

In a preferred embodiment, component B comprises or consists of the following components:
45 wt.-% to 55 wt.-% of ground-granulated blast-furnace slag,
0.1 to 0.5 wt.-% of a blocking agent for the ground-granulated blast-furnace slag,
0.01 wt.-% to 0.5 wt.-% of a thickening agent,
optionally 10 to 30 wt.-% of at least one mineral filler,
optionally 0.5 to 1.5 wt.-% of a plasticizer, and
15 wt.-% to 30 wt.-% of water, and
optionally 0.01 wt.-% to 5 wt.-% of lithium sulfate or lithium sulfate monohydrate.

In a most preferred embodiment, component B comprises or consists of the following components:
45 wt.-% to 55 wt.-% of ground-granulated blast-furnace slag,
0.1 to 0.5 wt.-% of sodium gluconate,
0.01 wt.-% to 0.5 wt.-% of hydroxymethyl cellulose or hydroxyethyl cellulose,
optionally 10 to 30 wt.-% of at least one mineral filler,
optionally 0.5 to 1.5 wt.-% of a plasticizer, and
15 wt.-% to 30 wt.-% of water, and
optionally 0.01 wt.-% to 5 wt.-% of lithium sulfate or lithium sulfate monohydrate.

The long-term stabilized aqueous initiator composition according to the present invention may be prepared as follows: Optionally plasticizer and thickening agent are mixed with water, followed by stepwise addition of ground-granulated blast-furnace slag and optionally filler(s) whilst increasing the stirring speed until the mixture homogenizes. Finally, optionally accelerator components may be added until complete homogenization of the mixture. Hence, the method for preparing the long-term stabilized aqueous initiator composition according to present invention comprises the following steps:
i) introducing water into a mixing tank,
ii) optionally dissolving and adding the thickening agent and optionally plasticizer under stirring,
iii) optionally dispersing and adding ground-granulated blast-furnace slag and optionally filler(s), whilst increasing stirring speed,
vi) continuing stirring until complete homogenization.

The long-term stabilized aqueous initiator composition was stored in tightly closed containers to avoid evaporation of water at ambient temperature and at 20°C and evaluated for any changes in fluidity, homogeneity (an indicator for sedimentation), and pH-value after several time intervals, i.e. after 1 week, 4 weeks, 3 months and 6 months. The properties of all components remained unaffected after 6 months, indicating a shelf life of at least 1 week, preferably of at least 4 weeks, more preferably of at least 3 months and most preferably of at least 6 months at ambient temperature up to 20°C.

The long-term stabilized aqueous initiator composition can be used in a method for activating the setting and hardening of a curable aqueous-phase aluminous cement component.

The method according to the present invention comprises the steps of:
i) adding the long-term stabilized aqueous initiator composition as described above to an aqueous-phase aluminous cement component, and
ii) mixing it.

Preferably, the cement component to which the long-term stabilized aqueous initiator composition can be added, is based on an aqueous-phase calcium aluminate cement (CAC) or an aqueous-phase calcium sulfoaluminate cement (CAS). The calcium aluminate cement which can be used is characterized by rapid set and rapid hardening, rapid drying and shrinkage compensation when mixed with calcium sulfates, excellent resistance to corrosion and shrinkage. Such a calcium aluminate cement suitable to be used is for example Ternal^{®} White (Kerneos, France).

In particular, the cement component may comprise at least about 40 wt.-%, preferably at least about 50 wt.-%, more preferably at least about 60 wt.-%, most preferably at least about 70 wt.-%, from about 40 wt.-% to about 95 wt.-%, preferably from about 50 wt.-% to about 90 wt.-%, more preferably from about 60 wt.-% to about 85 wt.-%, most preferably from about 70 wt.-% to about 80 wt.-% of calcium aluminate, based on the total weight of the cement component.

Alternatively, the cement component may comprise at least about 20 wt.-%, preferably at least about 30 wt.-%, more preferably at least about 40 wt.-%, most preferably at least about 50 wt.-%, from about 20 wt.-% to about 80 wt.-%, preferably from about 30 wt.-% to about 70 wt.-%, more preferably from about 35 wt.-% to about 60 wt.-%, most preferably from about 40 wt.-% to about 55 wt.-% of aluminous cement, based on the total weight of component A and at least about 5 wt.-%, preferably at least about 10 wt.%, more preferably at least about 15 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.-%, most preferably from about 15 wt.-% to about 25 wt.-% of calcium sulfate, preferably calcium sulfate hemihydrate, based on the total weight of the cement component. The ratio of CaSO₄/CAC of said cement component should be less or equal to 35:65.

Preferably the cement component is blocked by a blocking agent selected from the group consisting of boric acid, carboxylic acid, phosphoric acid, metaphosphoric acid, phosphorous acid, phosphonic acids, and salts thereof. The amounts of aluminous cement and/or calcium sulfoaluminate cement by weight relative to the hydraulic binder total weight are higher than any of the following values: 50%, 60%, 70%, 80%, 90%, 95%, 99% or are 100%.

The cement component may further comprise the following characteristics, taken alone or in combination. The plasticizer which may be comprised in the cement component may be selected from the group consisting of low molecular weight (LMW) polyacrylic acid polymers, superplasticizers from the family of polyphosphonate polyox and polycarbonate polyox, and ethacryl superplasticizers from the polycarboxylate ether group, and mixtures thereof, for example Ethacryl^{™} G (Coatex, Arkema Group, France), Acumer^{™} 1051 (Rohm and Haas, U.K.), or Sika^{®} ViscoCrete^{®}-20 HE (Sika, Germany). Suitable plasticizers are commercially available products.

The cement component may additionally comprise a thickening agent. The thickening agents which can be used may be selected from the group consisting of organic products, such as xanthan gum, welan gum or DIUTAN^{®} gum (CPKelko, USA), starched-derived ethers, guar-derived ethers, polyacrylamide, carrageenan, agar agar, and mineral products, such as clay, and their mixtures. Suitable thickening agents are commercially available products.

The cement component may further comprise an antibacterial or biocidal agent. The antibacterial or biocidal agents which can be used may be selected from the group consisting of compounds of the isothiazolinone family, such as methylisothiazolinone (MIT), octylisothiazolinone (OIT) and benzoisothiazolinone (BIT) and their mixtures. Suitable antibacterial or biocidal agents are commercially available products. Exemplarily mentioned are Ecocide K35R (Progiven, France) and Nuosept OB 03 (Ashland, The Netherlands).

The cement component may also comprise at least one filler, in particular an organic or mineral filler. The filler may be selected from the group consisting of quartz powder, preferably quartz powder having an averaged grain size (d50%) of about 16 µm, quartz sand, clay, fly ash, fumed silica, carbonate compounds, pigments, titanium oxides, light fillers, and their mixtures. Suitable mineral fillers are commercially available products. Exemplarily mentioned is quartz powder Millisil W12 or W6 (Quarzwerke GmbH, Germany).

The water content comprised in the cement component may be at least about 1 wt.-%, preferably at least about 5 wt.-%, more preferably at least about 10 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.%, most preferably from about 15 wt.-% to about 25 wt.-%, based on the total weight of the cement component.

The presence of a plasticizer, thickening agent as well as an antibacterial or biocidal agent does not change the overall inorganic nature of the cement component.

Further, the cement component may comprise an accelerator component. The accelerator component may be constituted of at least one alkali and/or earth alkaline metal salt selected from the group consisting of hydroxides, chlorides, sulfates, phosphates, monohydrogen phosphates, dihydrogen phosphates, nitrates, carbonates and mixtures thereof, preferably the accelerator component is an alkali or earth alkaline metal salt, still preferably is a water-soluble alkali or earth alkaline metal salt, more preferably is a calcium metal salt, such as calcium hydroxide, calcium sulfate, calcium carbonate, calcium chloride, calcium formate or calcium phosphate, a sodium metal salt, such as sodium hydroxide, sodium sulfate, sodium carbonate, sodium chloride, sodium formate or sodium phosphate, or a lithium metal salt, such as lithium hydroxide, lithium sulfate, lithium sulfate monohydrate, lithium carbonate, lithium chloride, lithium formate or lithium phosphate, most preferably is lithium sulfate or lithium sulfate monohydrate. The cement component may comprises at least about 0.01 wt.-%, preferably at least about 0.05 wt.-%, more preferably at least about 0.1 wt.-%, most preferably at least about 1.0 wt.-%, from about 0.01 wt.-% to about 25 wt.-%, preferably from about 0.05 wt.-% to about 20 wt.-%, more preferably from about 0.1 wt.-% to about 15 wt.-%, most preferably from about 1.0 wt.-% to about 10 wt.-% of said accelerator, based on the total weight of the cement component.

The cement component to which the long-term stabilized aqueous initiator composition can be added, comprising the aluminous cement or calcium sulfoaluminate cement is preferably present in aqueous-phase, most preferably in form of a slurry or paste.

The long-term stabilized aqueous initiator composition according to the present invention is used in a mortar system comprising a curable aqueous-phase aluminous cement component. In particular, the long-term stabilized aqueous initiator composition is used as a first component in a two-component mortar system comprising a curable aqueous-phase aluminous cement component. Preferably, the use of the long-term stabilized aqueous initiator composition according to the present invention results in a two-component mortar system which has an initial set time of at least 5 min.

In particular, the long-term stabilized aqueous initiator composition according to the present invention is used for activating the setting and hardening of a curable aqueous-phase aluminous cement component used for chemical fastening of anchoring means in mineral substrates. Preferably, the anchoring means are anchor rods, threaded anchor rods, bolts or steel reinforcement bars. The mineral substrates in which the anchoring means are to be chemically fastened are structures made of brickwork, concrete, pervious concrete or natural stone.

Further, the long-term stabilized aqueous initiator composition according to the present invention may be used in an inorganic mortar system as a coating or for the attachment of fibers, scrims, fabrics or composites, in particular of high-modulus fibers, preferably of carbon fibers, in particular for the reinforcement of building structures, for example walls or ceilings or floors, or further for mounting components, such as plates or blocks, e.g. made of stone, glass or plastic, on buildings or structural elements.

The following examples illustrate the invention without thereby limiting it.

### EXAMPLES

### 1. Preparation of the long-term stabilized aqueous initiator composition

The long-term stabilized aqueous initiator composition is initially produced by mixing the constituents specified in Table 1. The proportions that are given are expressed in wt.-%.

An exemplary preparation of component B is as follows: In 21.00 grams of deionized water, 1.0 gram of Ecodis^{®} P50 (plasticizer), 0.1 gram Cellosize^{™} QP-100MH (thickener) and 0.22 grams of sodium gluconate (blocking agent) were dissolved. Whilst stirring with a dissolver, 50 grams of a ground-granulated blast-furnace slag, 17 grams of sand and 10.68 grams of Betocarb UF were added under vigorous stirring to obtain finally a smooth, liquid pasty slurry of the solids in water, the pH being above 11.

**Table 1: Composition of initiator components B0 and B1.**

| **Ingredients** | **Component B0** | **Component B1** |
|---|---|---|
| Water | 21.00 | 25.00 |
| GGBFS | 50.00 | 50.00 |
| Sodium gluconate | 0.22 | 0.22 |
| Quartzsand F32 | 17.00 | 14.00 |
| Betocarb UF | 10.68 | 9.68 |
| Cellosize 100 MH | 0.10 | 0.10 |
| Ecodis P50 | 1.00 | 1.00 |

| | | |
|---|---|---|
| GGBFS - ground-granulated blast-furnace slag marketed by Holcim Deutschland GmbH, Germany Sodium gluconate marketed by Jungbunzlauer GmbH, Germany Quartzsand F32 marketed by Quartzwerke GmbH, Germany Betocarb UF marketed by Omya GmbH, Germany Cellosize marketed by The Dow Chemical Company, USA Ecodis P50 marketed by Coatex, Arkema Group, France | | |

### 2. Stability monitoring of the long-term stabilized aqueous initiator composition

The long-term stabilized aqueous initiator compositions B0 and B1, were stored in tightly closed containers to avoid evaporation of water at ambient temperature and at 20°C and evaluated for any changes in fluidity, homogeneity, and pH-value after several time intervals, i.e. after 1 week, 4 weeks, 3 months and 6 months. Initiation capacity has also been tested.

Measuring the pH value is a good way to monitor the stability of an aqueous composition, i.e. suspension. The long-term stabilized aqueous initiator composition is considered to be unstable if its pH value significantly changes.

Evaluation of homogeneity is a good way to monitor the stability of an aqueous composition, i.e. suspension. The long-term stabilized aqueous initiator composition is considered to be unstable if it starts to harden and to sediment. Evaluation of homogeneity is used as an indicator for sedimentation.

The properties of the inventive aqueous initiator compositions, in particular the properties of all components remained unaffected after 6 months, thus the shelf life is at least 6 months at ambient temperature and at a temperature of 20°C. The pH value stayed above 12. Initiation capacity remained fully compared to freshly produced component B0 or B1.

### 3. Initiation of a curable aqueous-phase aluminous cement component

The initiation capacity of the long-term stabilized aqueous initiator composition of the present invention was evaluated by activating the setting and hardening of a curable aqueous-phase aluminous cement component, comprising the steps of adding the long-term stabilized aqueous initiator compositions B0 and B1 to an aqueous-phase aluminous cement component (composition A, Table 2), and mixing it.

The aqueous-phase aluminous cement component (A) is initially produced by mixing the constituents specified in Table 2. The proportions that are given are expressed in wt.-%.

In particular, 19.48 grams deionized water, 0.75 grams of 85% phosphoric acid (blocking agent), 0.6 grams Ethacryl G (superplasticizer), and 0.02 grams Nuosept^{®} (biocide) were homogenized at room temperature, and whilst stirring with a dissolver, the calcium aluminate cement (78.50 grams, pure Ternal White^{®}) is added in subsequent small portions, to obtain finally a smooth, liquid pasty slurry of the blocked cement in water, the pH being below 7. After addition of the calcium aluminate cement, 0.15 grams of lithium sulfate monohydrate and 0.5 grams xanthan gum (thickener) were added and the slurry was homogenized, at 2500 rpm it for 5 min.

**Table 2: Composition of binder component A.**

| **Ingredients** | **Binder component A** |
|---|---|
| Water | 19.48 |
| Ternal White | 78.50 |
| Li₂SO₄ | 0.15 |
| 85% H₃PO₄ | 0.75 |
| Xanthan Gum | 0.50 |
| Ethacryl G | 0.6 |
| Nuosept | 0.02 |

| | |
|---|---|
| Phosphoric acid 85% marketed by Sigma-Aldrich Chemie GmbH, Germany Ternal White^{®} marketed by Kerneos S.A., France LiSO₄ marketed by Sigma-Aldrich Chemie GmbH, Germany Xanthan Gum marketed by Colltec GmbH & CO. KG, Germany Nuosept OB 03 marketed by Ashland Nederland B.V., The Netherlands Ethacryl G marketed by Coatex, Arkema Group, France | |

After being produced separately, the aqueous-phase aluminous cement component and long-term stabilized aqueous initiator composition are mixed in a speed mixer in a volume ratio of 3:1 and the initial set time of the resulting mortar system measured by heat flow calorimetry.

The addition of the inventive aqueous initiator compositions to the aqueous-phase aluminous cement component resulted in a in mortar system having an initial set time of at least 5 min, in particular in the range of from about 5 to 25 min.

### 4. Determination of mechanical performance

After the preparation, the binder component A and the respective B-component were filled into separate chambers of a two-component plastic hard cartridges with a defined ratio of component A:B = 3:1. The hard cartridge was placed into a dispenser, a static mixer was attached, and the mortar was injected into steel sleeves and a threaded rod (M8) was inserted. The steel sleeves exhibited a depth of 28 mm and a diameter of 10 mm. The pull-out strength was measured after certain curing times to measure the improvement of the performance over the curing time of the mortar. Ultimate failure loads are calculated as bond strengths and given in N/mm² in Table 3.

**Table 3: Bond strengths of the inventive examples after different curing times.**

| **Mixing ratio of A:B** | **Curing time and pull-out values [N/mm²]** | |
|---|---|---|
| **Curing time** | **24h** | **48h** |
| A:BO = 3:1 | 20.39 | 23.14 |
| A:B1 = 3:1 | 14.35 | 17.98 |

Table 3 shows that the blocked slag slurry can be mixed with the blocked aluminate slurry and achieve good load values already within 24 hours of curing. Preferably is a ratio of A:B = 1:3 to 6:1, more preferably 1:1 to 5:1, even more preferably 2:1 to 4:1, most preferably A:B = 3:1.

It has been shown that the aqueous initiator composition of the present invention has a high lifetime, i.e. shelf life, that is to say the aqueous initiator composition does not set when stored at ambient temperature, for a period ranging from a couple of weeks to several months, i.e. of at least 1 week, preferably of at least 4 weeks, more preferably of at least 3 months and most preferably of at least 6 months at ambient temperature, so as to be protected against any storage or delivery delay. The aqueous initiator composition of the present invention remains in a slurry state and does not segregate, especially during transport, so that the implementation on site can be guaranteed. Moreover, the composition is poorly toxic and ecotoxic.

Once the curable aqueous-phase aluminous cement component has been initiated by the inventive aqueous initiator composition, it provides curing rates and mechanical strength comparable to those of the organic systems, but the essentially mineral composition thereof makes it far less toxic and very little polluting for the environment as well as allows for a more cost-effective production than of the known system of the prior art.

Further, it has been shown that a system based on an aqueous slurry comprising blocked aluminous component as the main binder component and blocked ground-granulated blast-furnace slag (GGBFS) in an aqueous slurry exhibiting an alkaline pH as the second binder component, a lower water-to-cement ratio can be employed compared to state-of-the-art two component injection mortars that comprise an activator component based on fillers. Additionally, it has been demonstrated that the long-term strength reduction by conversion that is characteristic for calcium aluminate cements can be mitigated by blending these two cements, to produce the stable Stratlingite hydrate phase as the slag provides a reactive silicate source.

Advantageously, it has been proven that ground-granulated blast-furnace slag, a waste product from steel production and therefore a cheap alternative having a low carbon footprint, when re-used as binder, may be employed in an inorganic fastening system.

Further, it has been shown that the mortar system comprising aqueous initiator composition the of the present invention does not contain any harmful substances whilst maintaining the standard for chemical anchoring applications, thereby also encompassing a reduced carbon-foot print and labelling. Additionally, it has been demonstrated that in particular the use of an aqueous initiator composition comprising blocked ground-granulated blast-furnace slag is more sustainable compared to using common Portland cements and has also a lower carbon footprint than synthetic resins.

## Claims

1. Long-term stabilized aqueous initiator composition comprising: blocked ground-granulated blast-furnace slag, a thickening agent, water and optionally at least one mineral filler.

2. Long-term stabilized aqueous initiator composition according to claim 1, wherein the blocked ground-granulated blast-furnace slag comprises ground-granulated blast-furnace slag and a blocking agent for the ground-granulated blast-furnace slag is selected from the group consisting of gluconic acid glycolic acid, phosphonic acid, salts and esters thereof, glucose, and mixtures thereof.

3. Long-term stabilized aqueous initiator composition according to 2, wherein the ground-granulated blast-furnace slag is present in a range of from about 10 wt.-% to about 70 wt.-%, based on the total weight of the long-term stabilized aqueous initiator composition.

4. Long-term stabilized aqueous initiator composition according to any one of claims 2 or 3, wherein the blocking agent for the ground-granulated blast-furnace slag is present in a range of from about 0.05 wt.-% to about 20 wt.-%, based on the total weight of the long-term stabilized aqueous initiator composition.

5. Long-term stabilized aqueous initiator composition according to any one of claims 2 to 4, wherein the blocking agent is sodium gluconate.

6. Long-term stabilized aqueous initiator composition according to any one of the preceding claims, wherein the thickening agent is a cellulosic thickener, preferably hydroxymethyl cellulose or hydroxyethyl cellulose.

7. Long-term stabilized aqueous initiator composition according to any one of the preceding claims, wherein the aqueous initiator composition has a shelf life of at least six months.

8. Long-term stabilized aqueous initiator composition according to any one of the preceding claims, wherein the aqueous initiator composition is in form of a slurry or paste.

9. Long-term stabilized aqueous initiator composition according to any one of the preceding claims, wherein the aqueous initiator composition has a pH-value of above 10.

10. Long-term stabilized aqueous initiator composition according to any one of the preceding claims, wherein the aqueous initiator composition comprises
45 wt.-% to 55 wt.-% of ground-granulated blast-furnace slag,
0.1 to 0.5 wt.-% of a blocking agent for the ground-granulated blast-furnace slag,
0.01 wt.-% to 0.5 wt.-% of a thickening agent,
optionally 10 to 30 wt.-% of at least one mineral filler,
optionally 0.5 to 1.5 wt.-% of a plasticizer, and
15 wt.-% to 30 wt.-% of water, and
optionally 0.01 wt.-% to 5 wt.-% of lithium sulfate or lithium sulfate monohydrate.

11. A method for preparing the long-term stabilized aqueous initiator composition according to any one of the preceding claims, comprising the following steps:
i) introducing water into a mixing tank,
ii) optionally dissolving and adding the thickening agent and optionally plasticizer under stirring,
iii) optionally dispersing and adding ground-granulated blast-furnace slag and optionally filler(s), whilst increasing stirring speed,
vi) continuing stirring until complete homogenization.

12. A method for activating the setting and hardening of a curable aqueous-phase aluminous cement component, comprising the steps of:
i) adding the long-term stabilized aqueous initiator composition according to any one of claims 1 to 10 to the aqueous-phase aluminous cement component, and
ii) mixing it.

13. Use of the long-term stabilized aqueous initiator composition according to any one of claims 1 to 10 in a mortar system comprising a curable aqueous-phase aluminous cement component.

14. Use of the long-term stabilized aqueous initiator composition according to any one of claims 1 to 10 as a first component in a two-component mortar system comprising a curable aqueous-phase aluminous cement component.

15. Use of according to claim 14, wherein the two-component mortar system has an initial set time of at least 5 min.

16. Use of the long-term stabilized aqueous initiator composition according to any one of claims 1 to 10 for activating the setting and hardening of a curable aqueous-phase aluminous cement component used for chemical fastening of anchoring means in mineral substrates.
